# NEUE EUROPÄISCHE PATENTSCHRIFT

(11) **EP 0 640 272 B2**
(45) Veröffentlichungstag und Bekanntmachung des Hinweises auf die Entscheidung über den Einspruch: **02.02.2005**
(45) Hinweis auf die Patenterteilung: 14.04.1999
(21) Anmeldenummer: 94109343.7
(22) Anmeldetag: 17.06.1994
(51) Int. Cl.: A01B 49/02

(54) **Bodenbearbeitungskombination**
Soil working combination
Machine combinée pour le travail du sol

(30) Priorität: 25.08.1993 DE 9312364 U
(43) Veröffentlichungstag der Anmeldung: 01.03.1995
(73) Patentinhaber: Rabe Agrarsysteme GmbH & Co. KG, 49152 Bad Essen (DE)
(72) Erfinder: Bohnenkamp, Wilfried, D-49152 Bad Essen (DE)
(74) Vertreter: Böck, Bernhard, Dipl.-Ing.

(56) Entgegenhaltungen:
- EP-A- 0 445 583
- EP-A- 0 612 464
- DD-A- 74 663
- DE-A- 2 528 930
- DE-A- 2 556 342
- DE-A- 2 754 871
- DE-A- 3 205 200
- DE-U- 7 615 202
- US-A- 190 366
- US-A- 3 576 213
- US-A- 3 701 327
- US-A- 4 539 921

## Beschreibung

Die Erfindung betrifft eine Bodenbearbeitungskombination mit mindestens zwei in Arbeitsrichtung aufeinander folgenden Bodenbearbeitungsgeräten, von denen das erste unmittelbar an eine Zugmaschine anschließbar ist.

Ein derartiges Bodenbearbeitungsgerät ist beispielweise aus dem deutschen Gebrauchsmuster 91 14 455 bekannt geworden. Hier wird ein erstes Bodenbearbeitungsgerät mit einem Zinkenrotor verwendet. Mit den hinteren Anschlußpunkten dieses Gerätes ist ein Zusatzrahmen verbunden, der eine Sämaschine beträgt, wobei dieser Zusatzrahmen jeweils zwei unterschiedliche Anschlußpunkte für den Anschluß einer nachgeschalteten Krümlerwalze aufweist, wobei diese Krümlerwalze dann je nach den gewählten Anschlußpunkten vor oder hinter den Säscharen angeordnet ist. Des weiteren ist hier die Möglichkeit gegeben, das vordere Arbeitsgerät auszutauschen, daß dieses beispielsweise auch durch eine Kreiselegge ersetzbar ist.

Diese heutzutage weit verbreitet motorisch angetriebenen Bodenbearbeitungsmaschinen, wie z. B. Kreiseleggen, die mit einer Sämaschine und einer Walze kombiniert werden können, erfordern einen hohen Leistungsbedarf und einen erheblichen Kapitaleinsatz. Darüberhinaus weisen diese doch eine vergleichbar mit rein gezogenen Geräten hohe Störanfälligkeit auf, was die Betriebskosten nicht unwesentlich erhöht. Zur Senkung der Bodenbearbeitungskosten werden heute gezogenen Maschinen angestrebt, wobei hier Bodenbearbeitungskombinationen eingesetzt werden sollen, die keine Vorarbeit durch einen Pflug erforderlich machen. Bei der Verwendung von Kreiseleggen wird zwar eine Vorarbeit durch einen Pflug nicht grundsätzlich gefordert, jedoch führt deren Einsatz auf einem nicht gepflügten Acker meist dazu, daß die Pflanzenreste, wie z. B. Stoppeln, überwiegend auf der Oberfläche liegen, während hier ein nicht zu tiefes Einmischen der Pflanzenreste in den Boden erwünscht ist.

Eine kostengünstigere Alternative zu rotierenden Bodenbearbeitungswerkzeuge sind also gezogene Bodenbearbeitungskombinationen, wobei diese aus mindestens zwei, häufig jedoch mehr hintereinander geschaltenen Geräten bestehen, so daß die Bodenbearbeitung in einem Arbeitsgang durchgeführt werden kann (siehe z.B. DE-A-3205200). Als Gerätekombination ist im allgemeinen ein vorlaufendes, nicht allzu tief arbeitendes Gerät erforderlich, dem eine Krümeleinrichtung und Verdichtungseinrichtung folgt, wobei es dann vorteilhaft ist, daß anschließend unmittelbar das Einsäen erfolgt. Beim Einsatz von derartigen Bodenbearbeitungskombinationen hat sich jedoch herausgestellt, daß eine einmal gewählte Kombination nicht für alle Bearbeitungsbedingungen gleich gut geeignet ist, sondern daß hier unterschiedliche Anforderungen auch unterschiedliche Bodenbearbeitungskombinationen erfordern.

Aufgabe der vorliegenden Erfindung ist es, eine Bodenbearbeitungskombination der eingangs genannten Art so auszubilden, daß diese zum einen mit nur geringem Aufwand den vielfältigen Anforderungen mit herkömmlichen Geräte anpaßbar, einfach in ihrem Aufbau und damit kostengünstig in der Herstellung ist, eine vergleichbar geringe Baulänge aufweist und damit einen Gesamtschwerpunkt hat, der mit Abstand vor den Stützrädern liegt und mit der in einem Arbeitsgang eine Feldbestellung durchführbar ist.

Diese Aufgabe wird erfindungsgemäß mit den Merkmalen des Anspruchs 1 gelöst.

Vorteilhaft ist der Zusatzrahmen mit dem Rahmen des in Fahrtrichtung vorne liegenden Bodenbearbeitungsgerätes über eine Flanschverbindung lösbar verbunden, so daß der Austausch dieses Bodenbearbeitungsgerätes entweder komplett oder aber durch Austausch einzelner Werkzeuge bzw. Werkzeuggruppen desselben vorgenommen werden kann. Der Zusatzrahmen selbst ist mit Stützrädern versehen, die es gestatten, den Zusatzrahmen und damit das vorlaufende Bodenbearbeitungsgerät wie auch die weiteren an dem Zusatzrahmen angeschlossenen Bodenbearbeitungsgeräte auszuheben. Der Zusatzrahmen als solcher trägt zwei Koppelgestänge, die vorteilhaft in Form von Ober- und Unterlenkern ausgebildet sind, so daß an diesem Zusatzrahmen handelsübliche Bodenbearbeitungsgeräte angeschlossen werden können, beispielsweise eine Krümelwalze wie auch eine Sämaschine. Das jeweils vorne liegende Koppelgestänge des Zusatzrahmens ist mit seinem Oberlenker an einem Turm befestigt, der an einem Querträger des Zusatzrahmens angeordnet ist. Der Oberlenker des in Fahrtrichtung hinten liegenden Koppelgestänges ist an eine Brücke befestigt, die auf den Längsträgern angeordnet ist. Dies bringt den Vorteil, daß hierdurch ein relativ großer Freiraum für den in Fahrtrichtung vorne liegenden Oberlenker geschaffen wird. Darüberhinaus ist es vorteilhaft, wenn die Unterlenker des vorne liegenden Koppelgestänges seitlich oder unterhalb der Längsträger des Zusatzrahmens angeordnet sind. Hierdurch ist es möglich, das vordere Koppelgestänge in der Nähe des vorderen Endes des Zusatzrahmens anzuordnen, so daß die Baulänge der gesamten Bodenbearbeitungskombination vergleichsweise kurz gehalten werden kann, was auch dazu führt, daß der Schwerpunkt der gesamten Bodenbearbeitungskombination im wesentlichen vor den Stützrädern des Zusatzrahmens liegt.

Die Unterlenker sowohl des vorderen als auch des hinteren Koppelgestänges sind in ihrer Schwenkbewegung nach unten hin durch einstellbare Anschläge begrenzt. Des weiteren sind diese Unterlenker vorteilhaft mittels Federn gegenüber dem Zusatzrahmen abgestützt, so daß für die von den Unterlenkern getragenen weiteren Bodenbearbeitungsgeräten eine gute Bodenanpassung erhalten wird und die Werkzeuggruppen (z. B. die Krümelwalze) durch Anteile des Rahmengewichts belastet werden können.

Eine weitere vorteilhafte Maßnahme der Erfindung besteht darin, daß die Unterlenker des hinten liegenden Koppelgestänges federnd auf dem Rahmen des vorauslaufenden Bodenbearbeitungsgerätes abgestützt sind. Hierdurch läßt sich in einfacher Weise eine zusätzliche Belastung des voraus laufenden Bodenbearbeitungsgerates, beispielsweise einer Krümelwalze durch eine beispielsweise nachgeschaltene Sämaschine erreichen, wodurch der Bodenanpreßdruck der Bodenwalze einstellbar ist.

Vorteilhaft ist es des weiteren, wenn das jeweils hinten liegende Koppelgestänge über eine eigene Aushubvorrichtung verfügt, wodurch der Ablauf der Aushebevorgänge am Feldende optimiert und was bei entsprechender Gestaltung des Gestänges insbesondere für den Straßentransport vorteilhaft ist, weil hierdurch die Transportlänge der gesamten Bodenbearbeitungskombination verringert werden kann. Um eine optimale Bodenbearbeitung in einem Arbeitsgang zu erreichen, hat sich herausgestellt, daß als vorderes Bodenbearbeitungsgerät eine Scheibenegge, eine Spatentollegge, ein Grubber oder eine Kombination vorgenannter Geräte gewählt wird. Als nachgeordnetes Bodenbearbeitungsgerät bietet sich eine Walze, insbesondere eine Krümelwalze an, wobei das dritte Bodenbearbeitungsgerät vorteilhaft eine Sämaschine ist. Eine derartige Kombination gestattet die Bodenbearbeitung und Einsäung ohne jegliche Vorarbeit in einem Arbeitsgang.

Als besonders vorteilhaft hat sich herausgestellt, wenn das Bodenbearbeitungsgerät als Aufsattelgerät ausgebildet ist, d. h. wenn die gesamte Kombination nur von den Stützrädern getragen wird, die am Zusatzrahmen angeordnet sind. Hierdurch läßt sich die Bodenbearbeitungskombination sehr preisgünstig herstellen.

Mehrere Ausführungsbeispiele der Erfindung, sind im folgenden anhand der Zeichnung näher beschrieben. In dieser zeigen:
- Fig. 1: eine Seitenansicht eines Ausführungsbeispieles einer erfindungsgemäßen Bodenbearbeitungskombination.
- Fig. 2: eine Draufsicht auf das Ausführungsbeispiel nach Fig. 1,
- Fig. 3: einen Ausschnitt aus der Seitenansicht gemäß Fig. 1 in vergrößertem Maßstab,
- Fig. 4: eine Seitenansicht entsprechend Fig. 3, jedoch mit einer anderen Gerätekombination,

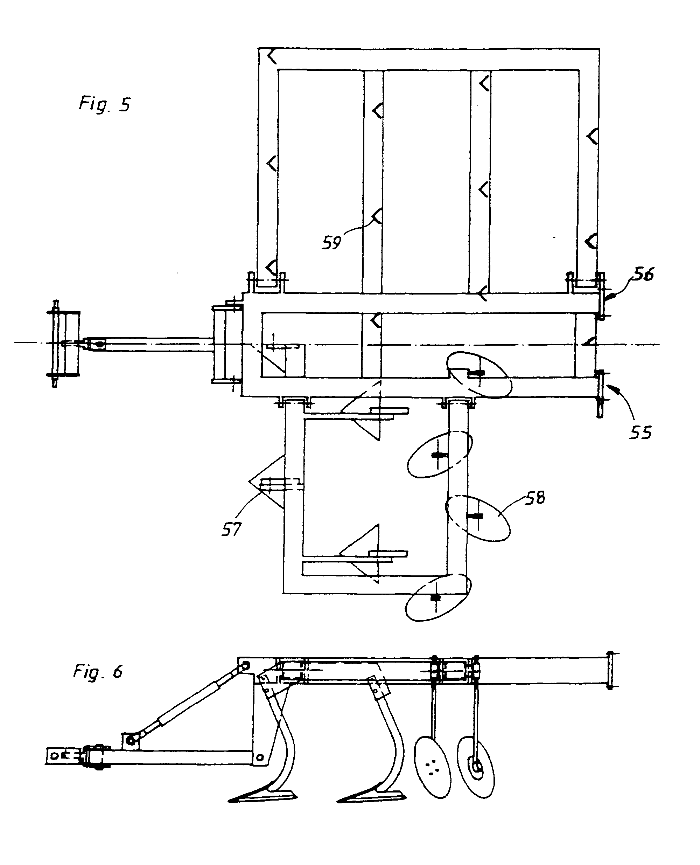

- Fig. 5: eine Draufsicht auf ein vorderes Bodenbearbeitungsgerät, wobei hier zwei alternative Geräte in einer Darstellung gezeigt sind und
- Fig. 6: eine Seitenansicht gemäß Fig. 5.

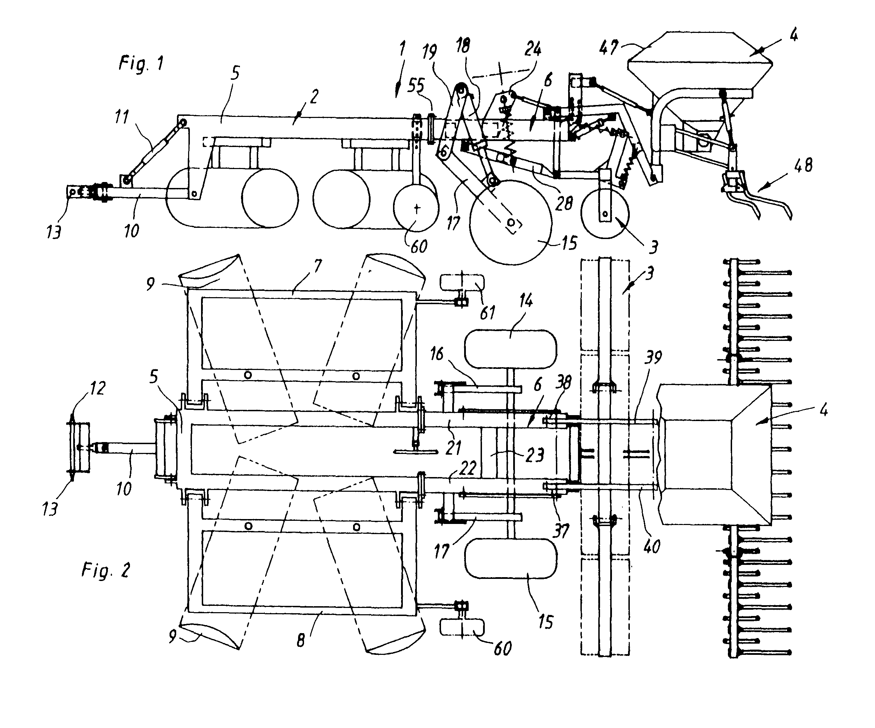

Die in den Fig. 1 bis 3 dargestellte Bodenbearbeitungskombination besteht aus drei Bodenbearbeitungsgeräten 2, 3, 4, wobei das erste Bodenbearbeitungsgerät 2 über einen eigenen Rahmen 5 verfügt, während sich die Bodenbearbeitungsgeräte 3, 4 einen Rahmen 6 teilen. An dem Rahmen 5 des vorderen Bodenbearbeitungsgerätes 2 sind klappbare Seitenrahmen 7 angeordnet, die im Ausführungsbeispiel Scheibeneggen 9 tragen.

Am vorderen Ende des Rahmens 5 ist eine Deichsel 10 angelenkt, die über ein Spannschloß 11 (in Fig. 2 nicht gezeigt) relativ zum Rahmen 5 einstellbar ist. Am vorderen Ende der Deichsel 10 sind Unterienkeranschlüsse 12, 13 für den Anschluß an einer nicht gezeigten Zugmaschine dargestellt. Bei dem Gerät handelt es sich um ein Aufsattelgerät, das zum einen von der Zugmaschine und zum anderen von Stützrädern 14, 15 getragen wird, die einen Karren bilden, der über Träger 16, 17 am Zusatzrahmen 6 angelenkt sind. Die Höhenverstellung der Stützräder 14, 15 relativ zum Züsatzrahmen 6 erfolgt über Hydraulikzylinder 18, die in Fig. 2 der Übersichtlichkeit halber weggelassen worden sind. Die Träger 16, 17 der Stützräder 14, 15 greifen mit ihren Enden an starr mit dem Rahmen 6 verbundene Arme 19 an, an deren einem Ende auch die Hydraulikzylinder 18 angelenkt sind. Die anderen Enden der Hydraulikzylinder 18 greifen an den Trägern 16, 17 an. Die relativ zum Zusatzrahmen 6 und damit auch zum Rahmen 5 höhenveränderlichen Stützräder 14, 15 dienen zum einen zum Ausheben des Gerätes und können zum anderen zur Regulierung der Arbeitstiefe verwendet werden.

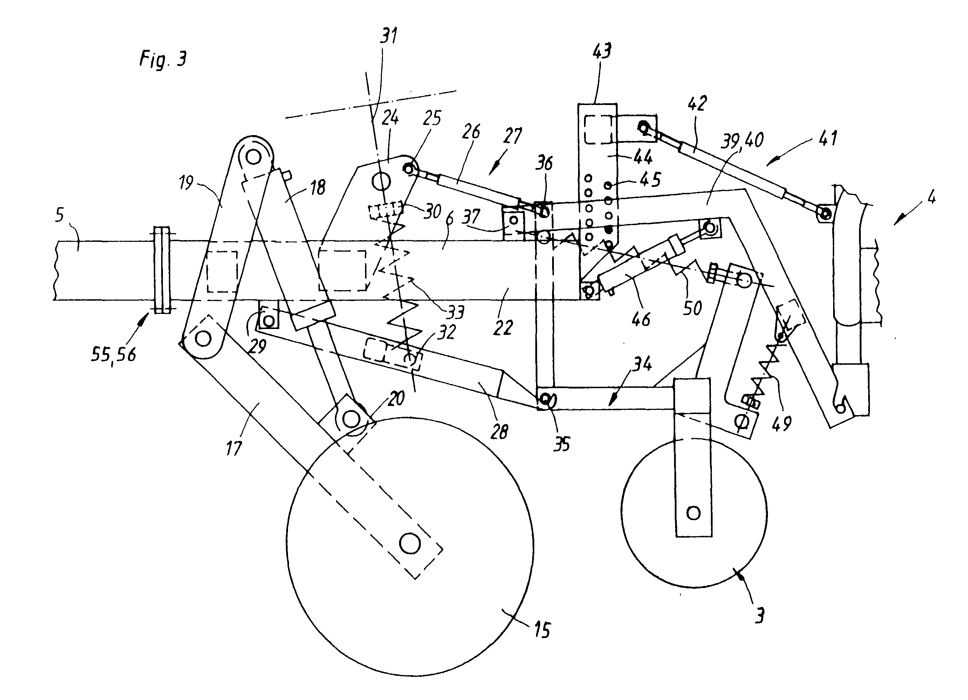

Der Zusatzrahmen 6 besteht aus zwei Längsträgern 21, 22, die mittig durch einen Querträger 23 verbunden sind (Fig. 3). Am Querträger 23 ist ein Turm 24 angeordnet, der Anschlüsse 25 für den Oberlenker 26 eines vorderen Koppelgestänges 27 trägt, dessen zugehöriger Unterlenker 28 an einer Lasche 29 angelenkt ist, die ihrerseits unterhalb der Längsträger 21, 22 des Zusatzrahmens 6 befestigt ist.

Am Turm 24 ist eine nur schematisch dargestellte Gewindestange 31 gelagert, deren unteres Ende durch eine die Unterlenker 28 verbindende Stange 32 greift, so daß hierdurch ein die Bewegung der Unterlenker 28 nach unten begrenzender einstellbarer Anschlag geschaffen wird. Gegenüber dem Rahmen 6 sind die Unterlenker 28 durch ein Federelement 33 abgestützt, so daß diese nach oben relativ zum Rahmen hin beweglich angeordnet sind. Die Federkraft ist über eine Gewindemutter 30 einstellbar.

Das Bodenbearbeitungsgerät 3 besteht aus einer Krümelwalze, die ihrerseits einen Rahmen 34 aufweist, der mit Anschlüssen 35, 36 für die Ober- und Unterlenker 26, 28 des vorderen Koppelgestänges 27 versehen sind.

Der Zusatzrahmen 6 weist des weiteren ein im Bereich seines hinteren Endes liegende Anschlußpunkte 37, 38 für die Unterlenker 39, 40 des hinteren Koppelgestänges 41 auf. Der Oberlenker 42 des Koppelgestänges 41 ist an einer portalartigen Brücke 43 befestigt, die auf den Längsträgern 21, 22 mit ihren Seitenteilen 44 befestigt ist. In diesen Seitenteilen sind Lochreihen 45 vorgesehen, in die Stifte einsteckbar sind, die zur Begrenzung des Weges der Unterlenker 39, 40 nach unten dienen. Des weiteren greifen an den Unterlenkern Aushubvorrichtungen 46 an, mit denen das am Koppelgestänge 41 angeschlossene Bodenbearbeitungsgerät 4 aushebbar ist.

Wie aus den Fig. 1 und 2 ersichtlich, besteht das hintere Bodenbearbeitungsgerät 4 aus einer Sämaschine mit einem Säkasten 47 sowie den Säscharen 48.

Wie insbesondere aus der Seitenansicht der Fig. 3 ersichtlich, sind die Unterlenker 39, 40 des hinteren Koppelgestänges 41 über ein Federelement 49 am Rahmen 34 des Bodenbearbeitungsgerätes 3 abgestützt. Hierdurch wird eine zusätzliche Belastung der Krümelwalze 3 erhalten. Darüberhinaus ist auch der Rahmen 34 des Bodenbearbeitungsgerätes 3 unmittelbar über ein weiteres Federelement 50 gegenüber dem Zusatzrahmen 6 abgestützt, so daß die Belastung der Krümelwalze mehrfach einstellbar ist.

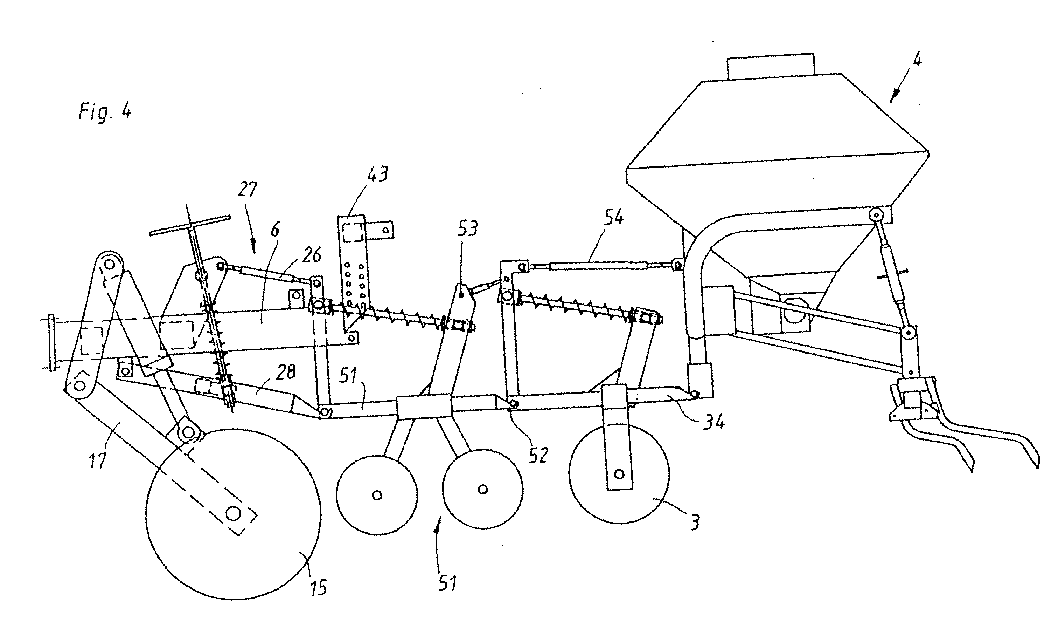

Bei dem Ausführungsbeispiel nach Fig. 4 ist der gleiche Zusatzrahmen 6 mit den Koppelgestängen 27 und 41 dargestellt, jedoch wurde hier die Kombination anders gewählt und zwar wurde vor dem Bodenbearbeitungsgerät 3, d. h. der Krümelwalze eine Messerrollegge 51 eingeschaltet, die ihrerseits wiederum Anschlußpunkte 52, 53 aufweist, an die das Bodenbearbeitungsgerät 3 angeschlossen ist. Die Sämaschine 4 ist im Ausführungsbeispiel unmittelbar auf dem Rahmen 34 des Bodenbearbeitungswerkzeuges 3 angeschlossen. Das gleiche gilt für deren Oberlenker. Der Anschluß der hinten liegenden Sämaschine kann jedoch auch mit dem Oberlenker 54 unmittelbar an die Brücke 43 des Zusatzrahmens 6 erfolgen, wobei andererseits auch Unterlenker 39, 40 entsprechend dem Ausführungsbeispiel nach Fig. 3 vorgesehen werden können, um die Sämaschine anzuschließen. Beide Anschlußarten sind möglich, was die große Variabilität der erfindungsgemäßen Bodenbearbeitungskombination zeigt.

Das vordere Bodenbearbeitungsgerät 2 kann vorteilhaft noch mit eigenen Stützrädern 60, 61 versehen werden, so daß dieses im Fall der Demontage einfach wegzurollen ist, so daß hierdurch der Austausch der Geräte weiter vereinfacht wird.

Der Zusatzrahmen 6 ist Ober eine Flanschverbindung 55, 56 am Rahmen 5 des vorderen Bodenbearbeitungsgerätes 2 angeschlossen. Somit ist die Möglichkeit gegeben, falls für das vordere Bodenbearbeitungswerkzeug 2 eine andere Gerätekombination gefordert wird, entweder dieses Gerät komplett auszutauschen oder aber einzelne Werkzeuge 57, 58, 59 oder aber den Austausch kompletter Seitenrahmen einschließlich der Werkzeuge vorzunehmen. Hierdurch ist es möglich, die erfindungsgemäße Bodenbearbeitungskombination in kurzer Zeit den jeweiligen Erfordernissen anzupassen, wobei herkömmliche Geräteeinheiten, ohne daß größere Umänderungen erforderlich sind, zu der erfindungsgemäßen Bodenbearbeitungskombination zusammengefaßt werden können. Eine derartige Bodenbearbeitungskombination eignet sich insbesondere für Anwender, die sich häufig wechselnden Anforderungen gegenübersehen. Darüberhinaus bietet diese Kombination für den Hersteller den Vorteil einer wesentlich reduzierten Lagerhaltung.

### Bezugszeichenliste [0024]

- 1: Bodenbearbeitungskombination
- 2: Bodenbearbeitungsgerät
- 3: Bodenbearbeitungsgerät
- 4: Bodenbearbeitungsgerät
- 5: Rahmen
- 6: Zusatzrahmen
- 7: Seitenrahmen
- 8: Seitenrahmen
- 9: Scheibeneggen
- 10: Deichsel
- 11: Spannschloss
- 12: Unterlenkeranschlüsse
- 13: Unterlenkeranschlüsse
- 14: Stützräder
- 15: Stützräder
- 16: Träger
- 17: Träger
- 18: Hydraulikzylinder
- 19: Arm
- 20 21: Längsträger
- 22: Längsträger
- 23: Querträger
- 24: Turm
- 25: Anschluß
- 26: Oberlenker
- 27: Koppelgestänge
- 28: Unterlenker
- 29: Lasche
- 30: Gewindemutter
- 31: Gewindestange
- 32: Stange
- 33: Federelement
- 34: Rahmen
- 35: Anschluß
- 36: Anschluß
- 37: Anschlußpunkt
- 38: Anschlußpunkt
- 39: Unterlenker
- 40: Unterlenker
- 41: Koppelgestänge
- 42: Oberlenker
- 43: Brücke
- 44: Seitenteile
- 45: Lochreihen
- 46: Aushubvorrichtungen
- 47: Säkasten
- 48: Säschare
- 49: Federelement
- 50: Federelement
- 51: Messerrollegge
- 52: Anschlußpunkt
- 53: Anschlußpunkt
- 54: Oberlenker
- 55: Flanschverbindung
- 56: Flanschverbindung
- 57: Werkzeug
- 58: Werkzeug
- 59: Werkzeug
- 60: Stützräder
- 61: Stützräder

## Patentansprüche

1. Bodenbearbeitungskombination (1) mit mindestens zwei in Arbeitsrichtung aufeinander folgenden Bodenbearbeitungsgeräten (2, 3, 4), von denen das erste (2) unmittelbar an eine Zugmaschine anschließbar ist,
**dadurch gekennzeichnet,**
**dass** am Rahmen (5) des ersten Bodenbearbeitungsgerätes (2) ein Zusatzrahmen (6) starr angeordnet ist, der von am Zusatzrahmen (6) befestigten und zu diesen höhenverstellbaren Stützrädern zumindest bei der Arbeit getragen ist,
**dass** am Zusatzrahmen (6) mindestens zwei in Fahrtrichtung hintereinander angeordnete Koppelgestänge (27, 41) für den Anschluss weiterer Bodenbearbeitungsgeräte (3, 4) vorgesehen sind und
**dass** die Koppelgestänge (27, 41) höhenverschwenkbar relativ zum Zusatzrahmen (6) angeordnet sind, wobei der Schwenkweg nach unten durch einstellbare Anschläge begrenzt ist.

2. Bodenbearbeitungskombination nach Anspruch 1, **dadurch gekennzeichnet, daß** der Zusatzrahmen (6) an seinem hinteren Ende U-förmig ausgebildet ist und daß die Koppelgestänge (27, 41) einerseits an den Enden der Längsträger (21, 22) und andererseits an, die Längsträger (21, 22) verbindenden Querträgern (23) des Zusatzrahmens (6) angeordnet sind.

3. Bodenbearbeitungskombination nach Anspruch 1 oder 2, **dadurch gekennzeichnet, daß** die Koppelgestänge (27, 41) in Form von Ober-und Unterlenkern (26, 28; 39, 40, 42) ausgebildet sind.

4. Bodenbearbeitungskombination nach einem der Ansprüche 1 bis 3, **dadurch gekennzeichnet, daß** der Oberlenker (26) des in Fahrtrichtung vorn liegenden Koppelgestänges (27) an einem mit einem Querträger (23) verbundenen Turm (24) und der Oberlenker (42) des hinten liegenden Koppelgestänges (41) an einer die Enden der Längsträger (21, 22) übergreifenden Brücke (43) angeordnet ist.

5. Bodenbearbeitungskombination nach einem der Ansprüche 1 bis 4, **dadurch gekennzeichnet, daß** die vorderen und/oder hinteren Unterlenker (28, 39, 40) der Koppelgestänge (27, 41) federnd gegenüber dem Zusatzrahmen (6) abgestützt sind.

6. Bodenbearbeitungskombination nach einem der Ansprüche 1 bis 5, **dadurch gekennzeichnet, daß** die Unterlenker der hinteren Koppelgestänge (41) jeweils federnd gegenüber dem Rahmen des vorauslaufenden Bodenbearbeitungsgerätes (3) abgestützt sind.

7. Bodenbearbeitungskombination nach einem der Ansprüche 1 bis 6, **dadurch gekennzeichnet, daß** zumindest die hinten liegenden Koppelgestänge (41) eine eigene Aushubvorrichtung (46) haben.

8. Bodenbearbeitungskombination nach einem der Ansprüche 1 bis 7, **dadurch gekennzeichnet, daß** der Zusatzrahmen (6) mit dem Rahmen (5) des ersten Bodenbearbeitungsgerätes (2) lösbar verbunden ist.

9. Bodenbearbeitungskombination nach Anspruch 8, **dadurch gekennzeichnet, daß** der Zusatzrahmen (6) über eine Flanschverbindung (55, 56) mit dem Rahmen (5) des ersten Bodenbearbeitungsgerätes (2) verbunden ist.

10. Bodenbearbeitungskombination nach einem der Ansprüche 1 bis 9, **dadurch gekennzeichnet, daß** das vordere Bodenbearbeitungsgerät (2) eine Scheibenegge, eine Spatenrollegge, ein Grubber oder eine Kombination vorgenannter Geräte ist.

11. Bodenbearbeitungskombination nach einem der Anspruche 1 bis 9, **dadurch gekennzeichnet, daß** an dem ersten Koppelgestänge (27) eine Walze insbesondere eine Krümelwalze angeschlossen ist.

12. Bodenbearbeitungskombination nach Anspruch 11, **dadurch gekennzeichnet, daß** zwischen dem ersten Koppelgestänge (27) und der Walze (3) eine zweireihige Messerrollegge (51) angeordnet ist.

13. Bodenbearbeitungskombination nach Anspruch 12, **dadurch gekennzeichnet, daß** sowohl die Messerrollegge (51) wie auch die Walze (3) gegenüber ihrem Koppelgestänge (27) federnd abgestützt sind.

14. Bodenbearbeitungskombination nach einem der Ansprüche 1 bis 13, **dadurch gekennzeichnet, daß** an dem zweiten Koppelgestänge (41) eine Sämaschine (4) angeschlossen ist

15. Bodenbearbeitungskombination nach einem der Ansprüche 1 bis 14, **dadurch gekennzeichnet, daß** das erste Bodenbearbeitungsgerät (2) von der Zugmaschine getragen ist.

16. Bodenbearbeitungskombination nach einem der Ansprüche 1 bis 15, **dadurch gekennzeichnet, daß** die Stützräder (14, 15) unmittelbar vor oder zwischen den Koppelgestängen (27, 41) angeordnet sind.

## Claims

1. A soil-cultivation combination (1) with at least two soil-cultivation implements (2,3,4) following in succession in the working direction and the first (2) of which can be directly connected to a tractor, **characterized in that** an additional frame (6) is mounted rigidly on the frame (5) of the first soil-cultivation implement (2), and is supported at least during working by support wheels (14) secured to the additional frame (6) and is vertically adjustable with respect thereto, at least two coupling linkages (27, 41) following in succession in the driving direction for attaching further soil-cultivation implements (3, 4) are provided on the additional frame (6), and the coupling linkages (27, 41) are vertically pivotable in relation to the additional frame, whereat the pivoting path is limited at the bottom by adjustable stops.

2. A soil-cultivation combination according to Claim 1, **characterized in that** the additional frame (6) is U-shaped at the rear end thereof, and the coupling linkages (27, 41) are arranged at one end on the ends of the longitudinal supports (21, 22) and at the other end on transverse supports (23) of the additional frame (6) which connect the longitudinal supports (21, 22).

3. A soil-cultivation combination according to Claim 1 or 2, **characterized in that** the coupling linkages (27, 41) are constructed in the form of upper and lower control arms (26, 28, 39, 40, 42).

4. A soil-cultivation combination according to one of Claims 1 to 3, **characterized in that** the upper control arm (26) of the coupling linkage (27) situated in front in the direction of travel is arranged on a projection (24) connected to a transverse support (23) and the upper control arm (42) of the coupling linkage (41) situated at the rear is arranged on a bridge (43) engaging over the ends of the longitudinal supports (21, 22)

5. A soil-cultivation combination according to one of Claims 1 to 4, **characterized in that** the front and/or rear lower control arms (28, 39, 40) of the coupling linkages (27, 41) are supported in a sprung manner with respect to the additional frame (6).

6. A soil-cultivation combination according to one of Claims 1 to 5, **characterized in that** the lower control arms of the rear coupling linkages (41) are each supported in a sprung manner with respect to the frame of the leading soil-cultivation implement (3).

7. A soil-cultivation combination according to one of Claims 1 to 6, **characterized in that** at least the coupling linkages (41) situated at the rear have their own lifting device (46).

8. A soil-cultivation combination according to one of Claims 1 to 7, **characterized in that the** additional frame (6) is releasably connected to the frame (5) of the first soil-cultivation implement (2).

9. A soil-cultivation combination according to Claim 8, **characterized in that** the additional frame (6) is connected to the frame (5) of the first soil-cultivation implement (2) by way of a flanged connexion (55, 56).

10. A soil-cultivation combination according to one of Claims 1 to 9, **characterized in that** the front soil-cultivation implement (2) is a disc harrow, a rotary-spade harrow, a cultivator or a combination of the aforesaid implements.

11. A soil-cultivation combination according to one of Claims 1 to 9, **characterized in that** a roller, in particular a roller tiller, is attached to the first coupling linkage (27).

12. A soil-cultivation combination according to Claim 11, **characterized in that** a two-row rotary harrow (51) is arranged between the first coupling linkage (27) and the roller (3).

13. A soil-cultivation combination according to Claim 12, **characterized in that** both the rotary harrow (51) and the roller (3) are supported in a sprung manner with respect to the coupling linkage (27) thereof.

14. A soil-cultivation combination according to one of Claims 1 to 13, **characterized in that** a seeding machine (4) is attached to the second coupling linkage (41).

15. A soil-cultivation combination according to one of Claims 1 to 14, **characterized in that** the first soil-cultivation implement (2) is supported by the tractor.

16. A soil-cultivation combination according to one of Claims 1 to 15, **characterized in that** the support wheels (14, 15) are arranged immediately in front of or between the coupling linkages (27, 41).

## Revendications

1. Machine combinée pour le travail du sol (1), comportant au moins deux appareils de travail du sol (2, 3, 4) se suivant l'un l'autre dans le sens de travail, dont le premier appareil (2) peut être raccordé directement à un tracteur, **caractérisée en ce que**, sur le cadre du premier appareil de travail du sol (2), est disposé, de façon rigide, un cadre supplémentaire (6) qui est porté, au moins pendant le travail, par des roues porteuses (14), fixées au cadre supplémentaire (6) et réglables en hauteur, **en ce que** sont prévus, sur le cadre supplémentaire (6), au moins deux trains de tiges d'accouplement (27, 41) disposés l'un derrière l'autre dans le sens de la marche pour le raccordement d'autres appareils de travail du sol (3, 4) et **en ce que** les trains de tiges d'accouplement (27, 41) sont réglables en hauteur par rapport au cadre supplémentaire (6).

2. Machine combinée pour le travail du sol suivant la revendication 1, **caractérisée en ce que** le cadre supplémentaire (6) est réalisé en forme de U à son extrémité arrière, et **en ce que** les trains de tiges d'accouplement (27, 41) sont disposés, d'un côté, aux extrémités des poutres longitudinales (21, 22) et, de l'autre côté, sur les poutres transversales (23) du cadre supplémentaire (6) reliant les poutres longitudinales (21, 22).

3. Machine combinée pour le travail du sol suivant la revendication 1 ou la revendication 2, **caractérisée en ce que** les trains de tiges d'accouplement (27, 41) sont réalisés sous la forme de bras d'articulation supérieurs et inférieurs (26, 28; 39, 40, 42).

4. Machine combinée pour le travail du sol suivant l'une des revendications 1 à 3, **caractérisée en ce que** le bras d'articulation supérieur (26) du train de tiges d'accouplement (27) placé à l'avant, dans la direction de déplacement, est disposé sur une tourelle (24) reliée à une poutre transversale (23) et que le bras d'articulation supérieur (42) du train de tiges d'accouplement (41) placé à l'arrière, dans la direction de déplacement, est disposé sur un portique (43) reliant, par dessus, les extrémités des poutres longitudinales (21, 22).

5. Machine combinée pour le travail du sol suivant l'une des revendications 1 à 4, **caractérisée en ce que** les bras d'articulation inférieurs avant et/ou arrière (28, 39, 41) des trains de tiges d'accouplement (27, 41) s'appuient, en faisant ressorts, sur le cadre supplémentaire (6).

6. Machine combinée pour le travail du sol suivant l'une des revendications 1 à 5, **caractérisée en ce que** les bras d'articulation inférieurs du train de tiges d'accouplement arrière (41) s'appuient chacun, en faisant ressort, sur le cadre de l'appareil de préparation du sol (3) qui précède.

7. Machine combinée pour le travail du sol suivant l'une des revendications 1 à 6, **caractérisée en ce qu'**au moins le train de tiges d'accouplement situé à l'arrière (41) présent e son propre dispositif de levage (46).

8. Machine combinée pour le travail du sol suivant l'une des revendications 1 à 7, **caractérisée en ce que** cadre supplémentaire (6) est relié de façon démontable au cadre (5) du premier appareil de travail du sol (2).

9. Machine combinée pour le travail du sol suivant la revendication 8, **caractérisée en ce que** le cadre supplémentaire (6) est relié par une liaison par bride (55, 56) au cadre (5) du premier appareil de travail du sol (2).

10. Machine combinée pour le travail du sol suivant l'une des revendications 1 à 9, **caractérisée en ce que** l'appareil de travail du sol (2) situé à l'avant est une herse à disques, une herse à bêches rotatives, une herse oscillante ou une combinaison de ces appareils.

11. Machine combinée pour le travail du sol suivant l'une des revendications 1 à 9, **caractérisée en ce que**, sur le premier train de tiges d'accouplement (27), est raccordé un rouleau, en particulier un rouleau émotteur.

12. Machine combinée pour le travail du sol suivant la revendication 11, **caractérisée en ce qu'**entre le premier train de tiges d'accouplement (27) et le rouleau (3), est disposée une herse à double rangée de couteaux rotatifs (51).

13. Machine combinée pour le travail du sol suivant la revendication 12, **caractérisée en ce qu'**aussi bien la herse à couteaux rotatifs (51) que le rouleau (3) s'appuient, en faisant ressort, sur leur train de tiges d'accouplement respectif (27).

14. Machine combinée pour le travail du sol suivant l'une des revendications 1 à 13, **caractérisée en ce que**, sur le deuxième train de tiges d'accouplement (41), est raccordé un semoir (4).

15. Machine combinée pour le travail du sol suivant l'une des revendications 1 à 14, **caractérisé en ce que** le premier appareil de travail du sol (2) est porté par le tracteur.

16. Machine combinée pour le travail du sol suivant l'une des revendications 1 à 15, **caractérisée en ce que** les roues porteuses (14, 15) sont disposées directement en avant des trains de tiges d'accouplement (27, 41), ou entre ceux-ci.
